# EUROPÄISCHE PATENTSCHRIFT

(11) **EP 1 060 877 B1**
(45) Veröffentlichungstag und Bekanntmachung des Hinweises auf die Patenterteilung: **12.04.2006**
(21) Anmeldenummer: 00110993.3
(22) Anmeldetag: 29.05.2000
(51) Int. Cl.: B32B 27/06, B32B 37/00, B29C 45/14

(54) **Schichtverbundmaterial mit einer Zwischenlage aus einem thermoplastischen Kunststoff**
Laminated composite material with a thermoplastic interlayer
Matériau composite stratifié avec une couche intermédiaire en matière thermoplastique

(30) Priorität: 16.06.1999 DE 19927549
(43) Veröffentlichungstag der Anmeldung: 20.12.2000
(73) Patentinhaber: Basell Poliolefine Italia S.r.l., 20124 Milano (IT)
(72) Erfinder: Müller, Klaus, 65843 Sulzbach (DE); Klemm, Klaus, 97656 Oberelsbach (DE)

(56) Entgegenhaltungen:
- EP-A- 1 010 520
- DE-A- 19 722 339
- FR-A- 2 673 575

## Beschreibung

Die vorliegende Erfindung betrifft ein Schichtverbundmaterial, enthaltend einen Träger aus einem thermoplastischen Polymeren, eine darauf angeordnete Zwischenlage und eine auf der Zwischenlage aufgebrachte hitzegehärtete Schicht, wobei die Zwischenlage aus einem Vlies aus Polypropylen mit einer Dicke von 0,001 bis 1 mm steht.

Die bisher bekannten Schichtverbundmaterialien, welche insbesondere in der Möbel- oder in der Haushaltsgeräteindustrie eingesetzt werden, bestehen im wesentlichen aus einer Trägerschicht aus Holz oder Holzfasern oder aus unter Harzzusatz verpreßten Einzelpapieren, auf die unter Einwirkung von Hitze und Druck Dekorschichten sowie weitere hitzegehärtete Schichten, sogenannte Overlays, aufgebracht werden. Die dabei verwendeten Dekorschichten weisen häufig Holz-, Metall- oder Marmormaserungen auf. Die Dekorschichten werden in vielen Fällen zusammen mit den auf ihnen aufgebrachten hitzegehärteten Schichten als sogenannte Laminate verwendet.

Derartige Schichtverbundmaterialien weisen indes den Nachteil auf, daß sie eine gewisse Empfindlichkeit gegenüber von den Rändern her in die Kernschicht eindringender Feuchtigkeit aufweisen, weil sowohl Holz, als auch Holzfasern oder Einzelpapiere unter dem Einfluß von Feuchtigkeit zum Aufquellen neigen. Weiterhin lassen sich derartige Schichtverbundmaterialien nur mit relativ hohem Aufwand verformen.

Für zahlreiche industrielle Anwendungen, beispielsweise in der Automobil- oder Elektroindustrie benötigt man als Oberflächenmaterialien Werkstoffe, die einerseits eine hohe Druckfestigkeit und andererseits eine relativ hohe Temperaturbeständigkeit aufweisen und sich darüber hinaus gut dekorativ ausgestalten lassen sollten.

In der Möbelherstellung werden schon seit längerem Oberflächenmaterialien eingesetzt, wobei mehrere Schichten, u.a. eine Trägerschicht, eine Dekorschicht und eine darauf aufliegende hitzegehärtete Schicht, mit Hilfe von weiteren Verbundschichten, beispielsweise aus Papier oder aus Klebefolien, ein dekoratives Schichtverbundmaterial ergeben. Ein derartiges Schichtverbundmaterial ist jedoch sehr aufwendig herzustellen, weist oft einen hohen Formaldehydanteil auf und zeigt ein ungünstiges Quellverhalten.

Aus der DE-A 1 97 22 339 ist ein Schichtverbundmaterial bekannt, welches eine Trägerschicht aus Polypropylen, eine darauf angeordnete Dekorschicht und eine auf der Dekorschicht aufgebrachte hitzegehärtete Schicht enthält. Weiterhin beschreibt die ältere Anmeldung DE-A 19 858 173 ein Schichtverbundmaterial aus einer Trägerschicht verschiedener anderer thermoplastischer Polymerer, wie zum Beispiel aus bestimmten Copolymeren des Styrols oder aus Polyoxymethylen bzw. aus Polybutylenterephthalat, sowie einer darauf aufgebrachten Dekorschicht und einer auf dieser aufliegenden hitzegehärteten Schicht. Derartige Schichtverbundmaterialien aus einer Trägerschicht aus thermoplastischen Polymeren zeichnen sich gegenüber herkömmlichen Schichtverbundmaterialien mit Trägerschichten aus Holz, Holzfasern oder Papier u.a. durch eine hohe Temperatur- und Feuchtigkeitsbeständigkeit, bessere mechanische Festigkeit und eine leichtere Verarbeitbarkeit aus. Aufgrund einer gewissen Steifigkeit und Sprödigkeit der einzelnen polymeren Schichten zeigen aber auch die aus der DE-A 19 722 339 und der DE-A 19 858 173 bekannten Schichtverbundmaterialien noch gewisse Nachteile beim Verarbeiten und Verformen, insbesondere beim dreidimensionalen Verformen zu Bauteilen für den Automobil-, den Haushalts- oder den Elektrobereich. Weiterhin beobachtet man bei derartigen Schichtverbundmaterialien gelegentlich noch Mängel hinsichtlich deren mechanischer Stabilität, welche auf eine nicht ganz ausreichende Haftung zwischen der Trägerschicht und der Dekorschicht bzw. der hitzegehärteten Schicht zurückzuführen sind.

Die **EP-A 1 010 520** beschreibt als Stand der Technik gemäß Art. 54(3) und (4) EPÜ ein Laminat, das einen Träger aus einem thermoplastischen Polymeren, außer Polypropylen, einer darauf angeordneten Zwischenlage, einer auf der Zwischenlage angeordneten Dekorschicht und einer auf der Dekorschicht angeordneten hitzegehärteten Schicht. Die Zwischenlage soll aus einem thermoplastischen Kunststoff, außer Polypropylen, bestehen und eine gute Verbindung zwischen dem Träger und der Dekorschicht bewirken.

Die **FR-A 2673575** beschreibt ein Laminat aus einem Träger aus thermoplastischem Polymer, einer darauf angeordneten Textilschicht aus thermoplastischem Kunststoff und einer auf der Textilschicht aufgebrachten Schicht aus mit Melaminharz getränktem Papier, die ggf. hitzegehärtet sein kann. Das bekannte Laminat kann für Wandpaneele oder al Arbeitsplatte verwendet werden.

Der vorliegenden Erfindung lag die Aufgabe zugrunde, den geschilderten Nachteilen abzuhelfen und ein verbessertes Schichtverbundmaterial bereitzustellen, welches u.a. zwei- und dreidimensional sehr gut verformbar ist und aufgrund der hohen Haftung zwischen den einzelnen Schichten über eine sehr hohe mechanische Stabilität verfügt. Weiterhin sollte dieses Schichtverbundmaterial auch gut einfärbbar sein.

Demgemäß wurde ein verbessertes Schichtverbundmaterial entwikkelt, enthaltend einen Träger aus einem thermoplastischen Polymeren, eine darauf angeordnete Zwischenlage und eine auf der Zwischenlage aufgebrachte hitzegehärtete Schicht, wobei die Zwischenlage aus einem Vlies aus thermoplastischem Polypropylen mit einer Dicke von 0,001 bis 1 mm besteht.

Nach einer Abwandlung des erfindungsgemäßen Schichtverbundmaterials kann dieses zwischen der Zwischenlage und der hitzegehärteten Schicht noch eine auf der Zwischenlage aufgebrachte Dekorschicht enthalten. Das erfindungsgemäße Schichtverbundmaterial kann auch auf beiden Seiten des Trägers aus dem thermoplastischen Polymeren, eine entsprechende Zwischenlage, gegebenenfalls eine darauf angeordnete Dekorschicht und eine entweder auf der Zwischenlage oder aber auf der Dekorschicht aufgebrachte hitzegehärtete Schicht enthalten, wodurch eine sandwichartige Struktur mit der Trägerschicht in der Mitte entsteht.

Das Material des Trägers kann 1 bis 60, vorzugsweise 5 bis 50, besonders bevorzugt 10 bis 40 Gew.-%, bezogen auf das Gesamtgewicht des Trägers, an verstärkenden Füllstoffen enthalten, wie zum Beispiel Bariumsulfat, Magnesiumhydroxyd, Talkum mit einer mittleren Korngröße im Bereich von 0,1 bis 10 µm, gemessen nach DIN 66 115, Holz, Flachs, Kreide, Glasfasern, beschichtete Glasfasern, Lang- oder Kurzglasfasern, Glaskugeln oder Mischungen von diesen. Außerdem kann man dem Material des Trägers noch die üblichen Zusatzstoffe wie Licht-, UV- und Wärmestabilisatoren, Pigmente, Ruße, Gleitmittel, Flammschutzmittel, Treibmittel und dergleichen in den üblichen und erforderlichen Mengen hinzufügen.

Als thermoplastische Polymere, die den Träger bilden, kommen u.a. Polypropylen, Polyethylen, Polyvinylchlorid, Polysulfone, Polyetherketone, Polyester, Polycycloolefine, Polyacrylate und Polymethacrylate, Polyamide, Polycarbonat, Polyurethane, Polyacetale wie zum Beispiel Polyoxymethylen, Polybutylenterephthalate und Polystyrole in Betracht. Dabei sind sowohl Homopolymere als auch Copolymere dieser thermoplastischen Polymere verwendbar. Vorzugsweise besteht die Trägerschicht neben den verstärkenden Füllstoffen noch aus Polypropylen, Polyoxymethylen, Polybutylenterephthalat oder aus Polystyrol, insbesondere aus Copolymeren des Styrols mit untergeordneten Anteilen an einem oder mehreren Comonomeren wie zum Beispiel Butadien, α-Methylstyrol, Acrylnitril, Vinylcarbazol sowie Estern der Acryl-, Methacryl- oder Itaconsäure. Der Träger des erfindungsgemäßen Schichtverbundmaterials kann auch Rezyklate aus diesen thermoplastischen Polymeren enthalten.

Unter der Bezeichnung Polyoxymethylen sollen dabei Homo- und Copolymere von Aldehyden, beispielsweise von Formaldehyd, und von cyclischen Acetalen verstanden werden, die wiederkehrende Kohlenstoff-Sauerstoff-Bindungen im Molekül enthalten und eine Schmelzflußrate (MFR), nach ISO 1133, bei 230°C und unter einem Gewicht von 2,16 kg, von 5 bis 40 g/10 min., insbesondere von 5 bis 30 g/10 min. aufweisen.

Das bevorzugt verwendete Polybutylenterephthalat ist ein höhermolekulares Veresterungsprodukt von Terephthalsäure mit Butylenglykol und einer Schmelzflußrate (MFR), nach ISO 1133, bei 230°C und unter einem Gewicht von 2,16 kg, von 5 bis 50 g/10 min., insbesondere von 5 bis 30 g/10 min.

Als Copolymere des Styrols kommen insbesondere Copolymere mit bis zu 45 Gew.-%, vorzugsweise mit bis zu 20 Gew.-% an einpolymerisiertem Acrylnitril in Betracht. Derartige Copolymere aus Styrol und Acrylnitril (SAN) weisen eine Schmelzflußrate (MFR), nach ISO 1133, bei 230°C und unter einem Gewicht von 2,16 kg, von 1 bis 25 g/10 min., insbesondere von 4 bis 20 g/10 min. auf.

Weitere ebenfalls bevorzugt eingesetzte Copolymere des Styrols enthalten bis zu 35 Gew.-%, insbesondere bis zu 20 Gew.-% einpolymerisiertes Acrylnitril und bis zu 35 Gew. -%, insbesondere bis zu 30 Gew.-% einpolymerisiertes Butadien. Die Schmelzflußrate derartiger Copolymere aus Styrol, Acrylnitril und Butadien (ABS), nach ISO 1133, bei 230°C und unter einem Gewicht von 2,16 kg, liegt im Bereich von 1 bis 40 g/10 min., insbesondere im Bereich von 2 bis 30 g/10 min.

Als Materialien für den Träger werden insbesondere auch Polyolefine wie Polyethylen oder Polypropylen eingesetzt, wobei letzteres bevorzugt verwendet wird. Unter der Bezeichnung Polypropylen sollen dabei sowohl Homo- als auch Copolymere des Propylens verstanden werden. Copolymere des Propylens enthalten in untergeordneten Mengen mit Propylen copolymerisierbare Monomere, beispielsweise C₂-C₈-Alk-1-ene wie u.a. Ethylen, But-1-en, Pent-1-en oder Hex-1-en. Es können auch zwei oder mehr verschiedene Comonomere verwendet werden.

Besonders geeignete Trägermaterialien sind u.a. Homopolymere des Propylens oder Copolymere des Propylens mit bis zu 50 Gew.-% einpolymerisierter anderer Alk-1-ene mit bis zu 8 C-Atomen. Die Copolymere des Propylens sind hierbei statistische Copolymere oder Block- oder Impactcopolymere. Sofern die Copolymere des Propylens statistisch aufgebaut sind, enthalten sie im allgemeinen bis zu 15 Gew.-%, bevorzugt bis zu 6 Gew.-%, andere Alk-1-ene mit bis zu 8 C-Atomen, insbesondere Ethylen, But-1-en oder ein Gemisch aus Ethylen und But-1-en.

Block- oder Impactcopolymere des Propylens sind Polymere, bei denen man in der ersten Stufe ein Propylenhomopolymer oder ein statistisches Copolymer des Propylens mit bis zu 15 Gew.-%, bevorzugt bis zu 6 Gew.-%, anderer Alk-1-ene mit bis zu 8 C-Atomen herstellt und dann in der zweiten Stufe ein Propylen-Ethylen-Copolymer mit Ethylengehalten von 15 bis 80 Gew.-%, wobei das Propylen-Ethylen-Copolymer zusätzlich noch weitere C₄-C₈-Alk-1-ene enthalten kann, hinzupolymerisiert. In der Regel wird soviel des Propylen-Ethylen-Copolymer hinzupolymerisiert, daß das in der zweiten Stufe erzeugte Copolymer im Endprodukt einen Anteil von 3 bis 60 Gew-% aufweist.

Die Polymerisation zur Herstellung von Polypropylen kann mittels eines Ziegler-Natta-Katalysatorsystems erfolgen. Dabei werden insbesondere solche Katalysatorsysteme verwendet, die neben einer titanhaltigen Feststoffkomponente a) noch Cokatalysatoren in Form von organischen Aluminiumverbindungen b) und Elektronendonorverbindungen c) aufweisen.

Es können aber auch Katalysatorsysteme auf der Basis von Metallocenverbindungen bzw. auf der Basis von polymerisationsaktiven Metallkomplexen eingesetzt werden.

Im speziellen enthalten übliche Ziegler-Natta-Katalysatorsysteme eine titanhaltige Feststoffkomponente u.a. Halogenide oder Alkohole des drei- oder vierwertigen Titans, ferner eine halogenhaltige Magnesiumverbindung, anorganische Oxide wie zum Beispiel Kieselgel als Träger sowie Elektronendonorverbindungen. Als solche kommen insbesondere Carbonsäurederivate sowie Ketone, Ether, Alkohole oder siliciumorganische Verbindungen in Frage.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066, der US-A 4 857 613 und der US-A 5 288 824 beschrieben. Bevorzugt wird das aus der DE-A 195 29 240 bekannte Verfahren angewandt.

Geeignete Aluminiumverbindungen b) sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Die Alkylgruppen können gleich oder voneinander verschieden sein. Es kommen lineare oder verzweigte Alkylgruppen in Betracht. Bevorzugt werden Trialkylaluminiumverbindungen verwendet, deren Alkylgruppen jeweils 1 bis 8 C-Atome aufweisen, beispielsweise Trimethylaluminium, Triethylaluminium, Tri-iso-butylaluminium, Trioctylaluminium oder Methyldiethylaluminium oder Mischungen daraus.

Neben der Aluminiumverbindung b) verwendet man in der Regel als weiteren Cokatalysator Elektronendonorverbindungen c) wie mono- oder polyfunktionelle Carbonsäuren, Carbonsäureanhydride oder Carbonsäureester, ferner Ketone, Ether, Alkohole, Lactone, sowie phosphor- und siliciumorganische Verbindungen, wobei die Elektronendonorverbindungen c) gleich oder verschieden von den zur Herstellung der titanhaltige Feststoffkomponente a) eingesetzten Elektronendonorverbindungen sein können.

Anstelle von Ziegler-Natta-Katalysatorsysteme können auch Metallocenverbindungen bzw. polymerisationsaktive Metallkomplexe zur Herstellung von Polypropylen verwendet werden.

Unter Metallocenen sollen hier Komplexverbindungen aus Metallen von Nebengruppen des Periodensystems mit organischen Liganden verstanden werden, die zusammen mit metalloceniumionenbildenden Verbindungen wirksame Katalysatorsysteme ergeben. Für einen Einsatz zur Herstellung von Polypropylen liegen die Metallocenkomplexe im Katalysatorsystem in der Regel geträgert vor. Als Träger werden häufig anorganische Oxide eingesetzt, es können aber auch organische Träger in Form von Polymeren, beispielsweise Polyolefine Verwendung finden. Bevorzugt sind die oben beschriebenen anorganischen Oxide, die auch zur Herstellung der titanhaltigen Feststoffkomponente a) verwendet werden.

Üblicherweise eingesetzte Metallocene enthalten als Zentralatome Titan, Zirkonium oder Hafnium, wobei Zirkonium bevorzugt ist. Im allgemeinen ist das Zentralatom über eine π-Bindung an mindestens eine, in der Regel substituierte, Cyclopentadienylgruppe sowie an weitere Substituenten gebunden. Die weiteren Substituenten können Halogene, Wasserstoff oder organische Reste sein, wobei Fluor, Chlor, Brom, oder Jod oder eine C₁-C₁₀-Alkylgruppe bevorzugt sind. Die Cyclopentadienylgruppe kann auch Bestandteil eines entsprechenden heteroaromatischen Systems sein.

Bevorzugte Metallocene enthalten Zentralatome, die über zwei gleichartige oder verschiedene π-Bindungen an zwei substituierte Cyclopentadienylgruppen gebunden sind, wobei diejenigen besonders bevorzugt sind, in denen Substituenten der Cyclopentadienylgruppen an beide Cyclopentadienylgruppen gebunden sind. Insbesondere sind Komplexe bevorzugt, deren substituierte oder unsubstituierte Cyclopentadienylgruppen zusätzlich durch cyclische Gruppen an zwei benachbarten C-Atomen substituiert sind, wobei die cyclischen Gruppen auch in einem heteroaromatischen System integriert sein können.

Bevorzugte Metallocene sind auch solche, die nur eine substituierte oder unsubstituierte Cyclopentadienylgruppe enthalten, die jedoch mit mindestens einem Rest substituiert ist, der auch an das Zentralatom gebunden ist.

Geeignete Metallocenverbindungen sind beispielsweise
Ethylenbis (indenyl) -zirkoniumdichlorid,
Ethylenbis (tetrahydroindenyl) -zirkoniumdichlorid,
Diphenylmethylen-9-fluorenylcyclopentadienylzirkoniumdichlorid,
Dimethylsilandiylbis(-3-tert.butyl-5-methylcyclopentadienyl)-zirkoniumdichlorid,
Dimethylsilandiyl(2-methyl-4-azapentalen)(2-methyl-4(4'-methylphenyl)-indenyl)-zirkoniumdichlorid,
Dimethylsilandiyl(2-methyl-4-thiapentalen)(2-ethyl-4(4'-tert.butylphenyl)-indenyl)-zirkoniumdichlorid,
Ethandiyl(2-ethyl-4-azapentalen)(2-ethyl-4(4'-tert.butylphenyl)-indenyl)-zirkoniumdichlorid,
Dimethylsilandiylbis(2-methyl-4-azapentalen)-zirkoniumdichlorid,
Dimethylsilandiylbis (2-methyl-4-thiapentalen) -zirkoniumdichlorid
Dimethylsilandiylbis (-2-methylindenyl) -zirkoniumdichlorid,
Dimethylsilandiylbis (-2-methylbenzindenyl) -zirkoniumdichlorid
Dimethylsilandiylbis(-2-methyl-4-phenylindenyl)zirkoniumdichlorid,
Dimethylsilandiylbis(-2-methyl-4-naphthylindenyl)zirkoniumdichlorid,
Dimethylsilandiylbis (-2-methyl-4-isopropylindenyl)zirkoniumdichlorid oder
Dimethylsilandiylbis(-2-methyl-4,6-diisopropylindenyl)zirkoniumdichlorid sowie die entsprechenden Dimethylzirkoniumverbindungen.

Die Metallocenverbindungen sind entweder bekannt oder nach an sich bekannten Methoden erhältlich. Zur Katalyse können auch Mischungen derartiger Metallocenverbindungen eingesetzt werden, ferner die in der EP-A 416 815 beschriebenen Metallocenkomplexe.

Weiterhin enthalten die Metallocen-Katalysatorsysteme metalloceniumionenbildende Verbindungen. Geeignet sind starke, neutrale Lewissäuren, ionische Verbindungen mit lewissauren Kationen oder ionische Verbindungen mit Brönsted-Säuren als Kation. Beispiele sind hierfür Tris(pentafluorphenyl)boran, Tetrakis(pentafluorophenyl)borat oder Salze des N,N-Dimethylaniliniums. Ebenfalls geeignet als metalloceniumionenbildende Verbindungen sind offenkettige oder cyclische Alumoxanverbindungen. Diese werden üblicherweise durch Umsetzung von Trialkylaluminium mit Wasser hergestellt und liegen in der Regel als Gemische unterschiedlich langer, sowohl linearer als auch cyclischer Kettenmoleküle vor.

Darüber hinaus können die Metallocen-Katalysatorsysteme metallorganische Verbindungen der Metalle der I., II. oder III. Hautgruppe des Periodensystems enthalten wie n-Butyl-Lithium, n-Hutyl-n-octyl-Magnesium oder Tri-iso-butyl-aluminium, Triethylaluminium oder Trimethylaluminium.

Die Herstellung der für die Trägerschicht verwendeten Polypropylene wird durch Polymerisation in wenigstens einer, häufig auch in zwei oder noch mehr hintereinandergeschalteten Reaktionszonen (Reaktorkaskade), in der Gasphase, in einer Suspension oder in einer flüssigen Phase (Bulkphase) durchgeführt. Es können die üblichen, für die Polymerisation von C₂-C₈-Alk-1-enen verwendeten Reaktoren eingesetzt werden. Geeignete Reaktoren sind u.a. kontinuierlich betriebene Rührkessel, Schleifenreaktoren oder Wirbelbettreaktoren. Die Größe der Reaktoren ist hierbei nicht von wesentlicher Bedeutung. Sie richtet sich nach dem Ausstoß, der in der oder in den einzelnen Reaktionszonen erzielt werden soll.

Als Reaktoren werden insbesondere Wirbelbettreaktoren sowie horizontal oder vertikal gerührte Pulverbettreaktoren verwendet. Das Reaktionsbett besteht im erfindungsgemäßen Verfahren im allgemeinen aus dem Polymerisat aus C₂-C₈-Alk-1-enen, das im jeweiligen Reaktor polymerisiert wird.

Die Polymerisation zur Herstellung der als Trägerschichten verwendeten Polypropylene wird unter üblichen Reaktionsbedingungen bei Temperaturen von 40 bis 120°C, insbesondere von 50 bis 100°C und Drücken von 10 bis 100 bar, insbesondere von 20 bis 50 bar vorgenommen.

Die als Träger verwendeten Polypropylene weisen in der Regel eine Schmelzflußrate (MFR), nach ISO 1133, von 0,1 bis 200 g/10 min., insbesondere von 0,2 bis 100 g/10 min., bei 230°C und unter einem Gewicht von 2,16 kg, auf.

Als Träger können im erfindungsgemäßen Schichtverbundmaterial auch Blends, d.h. Mischungen unterschiedlicher thermoplastischer Polymerer verwendet werden, beispielsweise Blends aus einem Copolymeren des Styrols mit Acrylnitril und einem Copolymeren aus Butadien und Acrylnitril.

Erfindungsgemäß enthält das Schichtverbundmaterial als Zwischenlage zwischen dem Träger und der hitzegehärteten Schicht noch eine Schicht aus einem thermoplastischen Polypropylen, die als Vlies mit einer Dicke von 0,001 bis 1,0 mm, insbesondere von 0,005 bis 0,3 mm, vorliegt.

Das erfindungsgemäße Schichtverbundmaterial kann nach einer bevorzugten Ausgestaltung zwischen der Zwischenlage und der hitzegehärteten Schicht noch eine auf der Zwischenlage angeordnete Dekorschicht enthalten.

Die Dekorschicht kann aus einem Kunststoffmaterial bestehen, das eine Prägung oder eine Färbung oder beides in Kombination aufweist, beispielsweise in Form eines Fertiglaminates. Die Dekorschicht kann aber auch aus Papier oder aus einem Gewebe oder einem papierähnlichen oder gewebeähnlichen oder holzähnlichen oder metallähnlichen Material aufgebaut sein. Beispiele hierfür wären Dekorschichten aus einem aluminiumartigen Material oder aus einem edelstahlartigen Material oder aber aus leder-, seide-, holz-, kork- oder linoleumartigen Material. Die Dekorschicht kann ebenfalls mit Acryl-, Phenol-, Harnstoff- oder Melaminharzen beharzt sein, wobei der Grad der Beharzung bei 50 bis 300 %, insbesondere bei 100 bis 300 %, bezogen auf das Gewicht der Dekorschicht liegen kann. Das Gewicht der Dekorschicht liegt üblicherweise im Bereich von 10 bis 200 g pro m², insbesondere im Bereich von 30 bis 150 g pro m² und besonders bevorzugt im Bereich von 50 bis 130 g pro m².

Die auf der Dekorschicht angeordnete hitzegehärtete Schicht (Overlay) besteht vorzugsweise aus einem duroplastischen Kunststoffmaterial, beispielsweise aus einem mit Acrylharz, Phenolharz, Melaminharz oder Harnstoffharz getränktem Papier, das durch Druck- oder Hitzeeinwirkung während der Herstellung des Schichtverbundmaterials vernetzt wird. Das Gewicht der hitzegehärteten Schicht (Overlay) liegt üblicherweise im Bereich von 10 bis 300 g pro m², insbesondere im Bereich von 15 bis 150 g pro m² und besonders bevorzugt im Bereich von 20 bis 70 g pro m².

Die hitzegehärtete Schicht (Overlay) kann auch als Fertiglaminat wahlweise einseitig oder auch beidseitig auf der Zwischenlage angeordnet sein. Es ist auch möglich, ein Fertiglaminat auf die Zwischenlage aufzubringen, welches aus der Dekorschicht und aus dem Overlay besteht. Derartige Fertiglaminate sind als solche bekannt und u.a. von der Firma Melaplast in Schweinfurt, Deutschland erhältlich.

Die Gesamtdicke des erfindungsgemäßen Schichtverbundmaterials liegt im Bereich von 1 mm bis 100 mm, vorzugsweise im Bereich von 1 mm bis 20 mm, insbesondere im Bereich von 1,5 bis 10 mm, wobei auf den Träger wenigstens 80 %, vorzugsweise wenigstens 90 % der Gesamtdicke entfallen.

Die Herstellung der erfindungsgemäßen Schichtverbundmaterialien kann nach einem Verfahren erfolgen, bei welchem die Materialien für die Zwischenlage, gegebenenfalls die Dekorschicht und die hitzegehärtete Schicht jeweils in Form dünner flächiger Gebilde vorgelegt werden und anschließend bei Temperaturen von 150 bis 300°C, insbesondere von 160 bis 280°C, mit dem Material für den Träger verbunden werden. Vorzugsweise können dabei die Zwischenlage, gegebenenfalls die Dekorschicht und die hitzegehärtete Schicht (Overlay) auch zusammen in Form eines Fertiglaminates eingesetzt werden, welches ebenfalls als flächiges Gebilde vorliegt.

Weiterhin ist es möglich, zuerst die Zwischenlage, gegebenenfalls die Dekorschicht und die hitzegehärtete Schicht durch Tauchen in ein Klebebad oder durch den Einsatz dünner Klebebänder in einer Presse, vorzugsweise in einer Doppelbandpresse, miteinander zu verbinden und anschließend diesen Verbund auf den Träger aufzubringen. Dabei kann es sich auch empfehlen, den Verbund aus Zwischenlage, gegebenenfalls Dekorschicht und hitzegehärteter Schicht zunächst durch ein Tiefziehverfahren bzw. eine direkte Verformung, beispielsweise in einem Spritzgußwerkzeug, zweidimensional zu verformen und danach mit dem thermoplastischen Kunststoff, welches den Träger bilden soll, durch Hinterspritzen, Extrudieren oder thermisches Verpressen zu vereinigen. Falls dabei der Träger und die Zwischenlage aus jeweils identischen thermoplastischen Kunststoffen bestehen, beobachtet man eine sehr hohe Haftung zwischen beiden Schichten.

Das Verfahren zur Herstellung des erfindungsgemäßen Schichtverbundmaterials kann ferner in der Weise abgewandelt werden, daß das Schichtverbundmaterial nach vorangegangener Wärmebehandlung bei Temperaturen von 150 bis 300°C, insbesondere von 150 bis 250°C und besonders bevorzugt von 160 bis 200°C dreidimensional verformt wird. Auf diese Weise lassen sich u.a. Formkörper für die Elektro-, die Bau- oder Automobilindustrie herstellen.

Das erfindungsgemäße Schichtverbundmaterial ist ferner in der Weise herstellbar, daß das Verbinden der hitzegehärteten Schicht mit der Zwischenlage, gegebenenfalls der Dekorschicht und dem Träger durch übliche Verarbeitungsverfahren in der Kunststoffindustrie durchgeführt wird. Übliche Verarbeitungsverfahren sind hierbei u.a. das Spritzgießen, die Extrusion oder das termische Verpressen der einzelnen Schichten.

Beim Spritzgießen werden die einzelnen Schichten, also der Träger, die Zwischenlage, gegebenenfalls die Dekorschicht und die hitzegehärtete Schicht (die beiden letzten Schichten auch zusammen als Fertiglaminat) entweder direkt über ein Tiefziehverfahren vorgeformt und anschließend in einem Spritzgußwerkzeug miteinander hinterspritzt, oder aber direkt erst im Spritzgußwerkzeug miteinander verformt und hinterspritzt. Dies kann sowohl einseitig als auch beidseitig geschehen, wobei im letzteren Fall die Zwischenlage, gegebenenfalls die Dekorschicht und die hitzegehärtete Schicht auf beiden Seiten des Trägers angeordnet sind. Dieser Spritzgußvorgang erfolgt üblicherweise bei Temperaturen von 150 bis 300°C, insbesondere von 180 bis 280°C, bevorzugt von 190 bis 270°C und Drücken von 50 bis 100 N/cm², insbesondere von 60 bis 80 N/cm². Durch die im Spritzgußwerkzeug auftretenden Temperaturen und Drücke erreicht man nicht nur eine sehr gute Verbindung der thermoplastischen Zwischenlage mit dem thermoplastischen Träger, sondern auch eine weitere Aushärtung des erfindungsgemäßen Schichtverbundmaterials. Dieses ist gegenüber den bisher bekannten Schichtverbundmaterialien sehr flexibel und läßt sich in weiteren Verarbeitungsschritten gut verformen.

Beim Extrusionsverfahren werden die Zwischenlage, gegebenenfalls die Dekorschicht und die hitzegehärtete Schicht des erfindungsgemäßen Schichtverbundmaterials über temperierte Kalander- oder Prägewalzen dem thermoplastischen Kunststoff des Trägers einseitig oder beidseitig zugeführt (sog. Kaschieren) und auf diese Weise miteinander verbunden. Dabei werden üblicherweise Temperaturen von 150 bis 300°C, insbesondere von 160 bis 250°C, bevorzugt von 170 bis 220°C und Drücke von 40 bis 200 N/cm², insbesondere von 50 bis 100 N/cm² eingestellt. Auf diese Weise erreicht man eine sehr gute Haftung der einzelnen flächigen Gebilde untereinander. Das erhaltene Schichtverbundmaterial weist ferner gute Oberflächeneigenschaften auf.

Eine Variante des Extrusionsverfahren ist das sogenannte Profilextrusionsverfahren, bei dem die einzelnen Schichten des erfindungsgemäßen Schichtverbundmaterials, insbesondere die Zwischenlage über eine Kalibierung so verformt werden, daß diese anschließend dem eigentlichen Profil, d.h. dem Träger aus thermoplastischem Kunststoff, direkt zugeführt werden kann.

Weiterhin ist das erfindungsgemäße Schichtverbundmaterial auch durch thermisches Verpressen der einzelnen Schichten erhältlich, wobei deren Verformung entweder vorab über ein vorgeschaltetes Tief ziehverfahren, oder aber direkt in der Presse erfolgen kann. Dabei gibt man ein thermoplastisches Kunststoffgranulat direkt auf einen Laminatverbund aus der Zwischenlage, gegebenenfalls der Dekorschicht und der hitzegehärteten Schicht und verpresst dieses miteinander bei Temperaturen von 150 bis 300°C, insbesondere von 160 bis 250°C, bevorzugt von 170 bis 230°C, Drücken von 50 bis 120 N/cm², insbesondere von 80 bis 100 N/cm² sowie Presszeiten von 0,5 bis 10 min., insbesondere von 1 bis 5 min und besonders bevorzugt von 1 bis 3 min.

Die auf diese Weise erhaltenen Schichtverbundmaterialien können auch an ihrer Oberfläche eingefärbt werden.

Die erfindungsgemäßen Schichtverbundmaterialien zeichnen sich u.a. durch gute mechanische Eigenschaften aufgrund der guten Haftung zwischen den einzelnen Schichten aus. Sie sind zwei- oder dreidimensional gut verformbar und weisen ferner eine hohe Resistenz gegenüber hohen Temperaturen oder Chemikalien auf.

Die erfindungsgemäßen Schichtverbundmaterialien eignen sich u.a. zur Herstellung von Möbeln, Fußbodenbelägen, Wandpaneelen, Haushaltsgeräten oder von Formkörpern in der Elektro-, Bau- oder der Automobilindustrie.

In den nachfolgenden Beispielen soll die Erfindung noch näher erläutert werden. Im Rahmen der Ausführungsbeispiele wurden folgende Meßmethoden angewandt:
- Das Verhalten gegenüber Wasserdampf wurde nach EN 438-2.24 bestimmt;
- die Abriebfestigkeit wurde nach EN 438-2.6 bei 6000 bis 10 000 U/min bestimmt;
- die Druckfestigkeit wurde durch Kugelfalltest nach EN 438 bei einer 8 mm Trägerplatte, Abdruckgröße: 5,5 mm, bestimmt;
- die Resistenz gegen Zigarettenglut wurde nach EN 438-2.18 bestimmt;
- die Chemikalienbeständigkeit wurde nach DIN 51958 bestimmt;
- die Kratzfestigkeit wurde nach ISO 1518 bestimmt;
- die Haftfestigkeit wurde bestimmt, indem mit einem Rasiermesser kreuzförmig parallele Schnitte (Gitterschnitte) in die Oberfläche eines Formteils eingebracht wurden. Dann wurde ein Klebeband auf die mit den Schnitten versehende Oberfläche aufgepreßt und danach wurde das Klebeband im rechten Winkel kräftig von der Oberfläche abgezogen. Wenn mit dem Klebeband praktisch keine Segmente von der Oberfläche entfernt werden konnten, wurde die Haftfestigkeit mit "+" bezeichnet, wenn sich einzelne Segmente in einer Menge von bis zu 10 % der Gesamtbelegung abziehen ließen, wurde das Ergebnis mit "±" bezeichnet, und wenn mehr als 10 % der gesamten Oberfläche abgezogen werden konnte wurde das Ergebnis mit "-" bezeichnet. Besonders gute Haftfestigkeiten wurden mit "++" bewertet.

### Beispiel 1

Ein mit 20 Gew.-% Talkum verstärktes Propylenhomopolymer mit einer Schmelzflußrate (MFR), nach ISO 1133, von 15 g/10 min., bei 230°C und 2,16 kg, wurde auf eine Temperatur von 260°C erhitzt und unter einem Spritzdruck von 80 N/cm² in eine flache Spritzgußkammer eingespritzt, in der vorher eine Zwischenlage in Form eines Kunststoffvlieses aus dem gleichen Propylenhomopolymer sowie ein Fertiglaminat eingelegt war. Das Fertiglaminat bestand aus einer Dekorfolie aus mit Harz getränktem Papier und einer hitzegehärteten Schicht (Overlay), ebenfalls aus mit Harz getränktem Papier. Unter Aufrechterhaltung eines Nachdrucks von 80 N/cm² wurde das Werkzeug innerhalb einer Zeitdauer von 0,5 min. auf eine Temperatur von 50°C abgekühlt, dann wurde die Spritzgußkammer geöffnet und das entstandene Schichtverbundmaterial entnommen. Die Ergebnisse der Messungen an dem Schichtverbundmaterial sind in der nachfolgenden Tabelle angegeben.

### Beispiel 2

Das Beispiel 1 wurde unter analogen Bedingungen mit dem gleichen Fertiglaminat wiederholt, wobei aber als Material für den Träger und das Kunststoffvlies als Zwischenlage ein Propylenhomopolymer mit einer Schmelzflußrate (MFR), nach ISO 1133, von 15 g/10 min., bei 230°C und 2,16 kg verwendet wurde, welches nicht verstärkt war. Das Propylenhomopolymer wurde auf eine Temperatur von 250°C erhitzt, unter einem Spritzdruck von 70 N/cm² in eine flache Spritzgußkammer eingespritzt und analog dem Beispiel 1 mit dem Kunststoffvlies und dem Fertiglaminat verbunden.

### Vergleichsbeispiel A

Das Beispiel 1 wurde unter analogen Bedingungen und unter Verwendung des gleichen Propylenhomopolymer als Träger sowie des gleichen Fertiglaminats wiederholt, wobei aber anstelle einer Zwischenlage aus Propylenhomopolymer jetzt ein Vlies aus einem mit Harz getränktem Papier eingesetzt wurde. Die Ergebnisse der Messungen an dem auf diese Weise erhaltenen Schichtverbundmaterial sind in der nachfolgenden Tabelle aufgeführt.

Aus der Tabelle ergibt sich, daß die erfindungsgemäßen Schichtverbundmaterialien, welche über eine Zwischenlage aus einem thermoplastischen Kunststoff verfügen, gegenüber den aus dem Stand der Technik bekannten Schichtverbundmaterialien u.a. eine höhere mechanische Stabilität, d.h. eine höhere Druckfestigkeit, sowie eine höhere Abriebsfestigkeit und Haftfähigkeit aufweisen. Darüber hinaus lassen sich die erfindungsgemäßen Schichtverbundmaterialien leicht zwei- oder dreidimensional verformen.

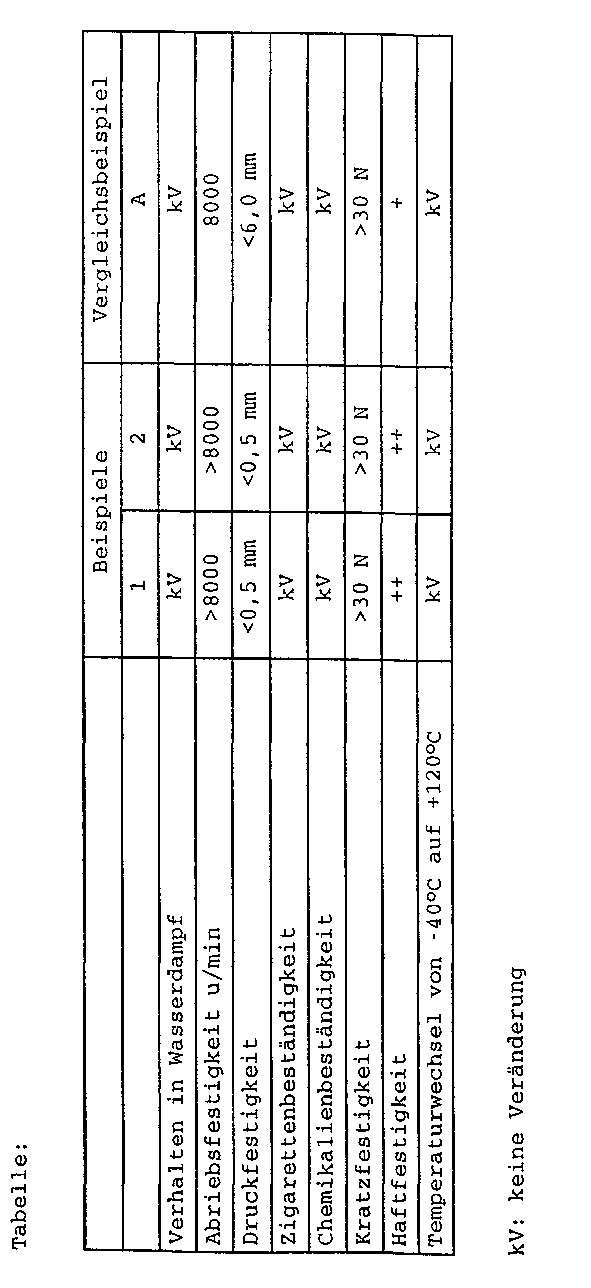

## Patentansprüche

1. Schichtverbundmaterial, enthaltend einen Träger aus einem thermoplastischen Polymeren, eine darauf angeordnete Zwischenlage und eine auf der Zwischenlage aufgebrachte hitzegehärtete Schicht, wobei die Zwischenlage aus einem Vlies aus Polypropylen mit einer Dicke von 0,001 bis 1 mm besteht.

2. Schichtverbundmaterial nach Anspruch 1, wobei zwischen der Zwischenlage und der hitzegehärteten Schicht noch eine auf der Zwischenlage angeordnete Dekorschicht aufgebracht wird.

3. Schichtverbundmaterial nach Anspruch 1 oder 2, wobei die Zwischenlage aus einem mit Harz getränktem Vlies aus Polypropylen besteht.

4. Schichtverbundmaterial nach einem der Ansprüche 1 bis 3, wobei die Zwischenlage und der Träger aus dem gleichen Kunststoff bestehen.

5. Schichtverbundmaterial nach einem der Ansprüche 1 bis 4, enthaltend im Träger zusätzlich Verstärkungsmaterial in einer Menge von 1,0 bis 60 Gew.-%, bezogen auf das Gesamtgewicht des Trägers, wobei dieses Verstärkungsmaterial aus Bariumsulfat, Magnesiumhydroxid, Talkum, Holz, Flachs, Kreide, Glasfasern oder Glaskugeln besteht.

6. Schichtverbundmaterial nach einem der Ansprüche 2 bis 5, wobei die Dekorschicht aus einem Kunststoffmaterial oder aus Papier besteht, das eine Prägung oder eine Färbung oder beides in Kombination aufweist.

7. Schichtverbundmaterial nach einem der Ansprüche 1 bis 6, wobei die hitzegehärtete Schicht aus einem duroplastischen Kunststoffmaterial besteht, das durch Druck- oder Hitzeeinwirkung während der Herstellung des Schichtverbundmaterials vernetzt wird.

8. Schichtverbundmaterial nach einem der Anspruche 1 bis 7, wobei seine Gesamtdicke im Bereich von 1 mm bis 100 mm liegt und auf den Träger wenigstens 80 % der Gesamtdicke entfallen.

9. Verfahren zur Herstellung eines Schichtverbundmaterials gemäß einem der Ansprüche 1 bis 8, **dadurch gekennzeichnet, daß** die Materialien für die Zwischenlage, gegebenenfalls die Dekorschicht und die hitzegehärtete Schicht jeweils in Form dünner flächiger Gebilde vorgelegt werden und anschließend bei Temperaturen von 150 bis 300°C mit dem Material für den Träger verbunden werden.

10. Verfahren zur Herstellung eines Schichtverbundmaterials nach Anspruch 9, **dadurch gekennzeichnet, daß** das Schichtverbundmaterial nach vorangegangener Wärmebehandlung bei Temperaturen von 150 bis 300°C dreidimensional verformt wird.

11. Verfahren nach den Ansprüchen 9 oder 10, **dadurch gekennzeichnet, daß** das Verbinden der hitzegehärteten Schicht mit der Zwischenlage, gegebenenfalls der Dekorschicht und dem Träger durch Spritzgießen erfolgt.

12. Verfahren nach den Ansprüchen 9 oder 10, **dadurch gekennzeichnet, daß** das Verbinden der hitzegehärteten Schicht mit der Zwischenlage, gegebenenfalls der Dekorschicht und dem Träger durch Extrusion erfolgt.

13. Verfahren nach den Ansprüchen 9 oder 10, **dadurch gekennzeichnet, daß** das Verbinden der hitzegehärteten Schicht mit der Zwischenlage, gegebenenfalls der Dekorschicht und dem Träger durch thermisches Verpressen erfolgt.

14. Verwendung des Schichtverbundmaterials gemäß den Ansprüchen 1 bis 8 zur Herstellung von Möbeln, Fußbodenbelägen, Wandpaneelen, Haushaltsgeräten oder von Formkörpern in der Elektro-, Bau- oder Automobilindustrie.

## Claims

1. A layered composite material comprising a backing made from a thermoplastic polymer, an intermediate layer arranged thereupon, and a heat-cured layer applied to the intermediate layer, where the intermediate layer is composed of a polypropylene nonwoven whose thickness is from 0.001 to 1 mm.

2. The layered composite material according to claim 1, where a decorative layer is also applied, arranged on the intermediate layer and between the intermediate layer and the heat-cured layer.

3. The layered composite material according to claim 1 or 2, where the intermediate layer is composed of a resin-saturated nonwoven made from polypropylene.

4. The layered composite material according to any one of claims 1 to 3, where the intermediate layer and the backing are composed of the same plastic.

5. The layered composite material according to any one of claims 1 to 4, where the backing additionally comprises an amount of from 1.0 to 60% by weight, based on the total weight of the backing, of reinforcing material, where this reinforcing material is composed of barium sulfate, magnesium hydroxide, talc, wood, flax, chalk, glass fibers or glass beads.

6. The layered composite material according to any one of claims 2 to 5, where the decorative layer is composed of a plastic or of paper which has an embossment or a coloration or both combined.

7. The layered composite material according to any one of claims 1 to 6, where the heat-cured layer is composed of a thermoset plastic which is crosslinked by exposure to pressure or heat during the production of the layered composite material.

8. The layered composite material according to any one of claims 1 to 7, whose total thickness is from 1 to 100 mm, and the backing accounts for at least 80% of the total thickness.

9. The process for producing a layered composite material according to any one of claims 1 to 8, which comprises providing the materials for the intermediate layer, the decorative layer, if appropriate, and the heat-cured layer in the form of thin sheets in each case and then bonding these at from 150 to 300°C to the material for the backing.

10. The process for producing a layered composite material according to claim 9, wherein the layered composite material is shaped in three dimensions after a preceding heat treatment at from 150 to 300°C.

11. The process according to claim 9 or 10, wherein injection molding is used to bond the heat-cured layer with the intermediate layer, the decorative layer, if appropriate, and the backing.

12. The process according to claim 9 or 10, wherein extrusion is used to bond the heat-cured layer with the intermediate layer, the decorative layer, if appropriate, and the backing.

13. The process according to claim 9 or 10, wherein hot-press molding is used to bond the heat-cured layer with the intermediate layer, the decorative layer, if used, and the backing.

14. The use of the layered composite material according to any of claims 1 to 8 for producing furniture, floor coverings, wall paneling, household equipment or moldings in the electrical, construction or automotive industry.

## Revendications

1. Matériau composite stratifié comprenant un support en polymère thermoplastique, une couche intermédiaire agencée sur le support et une couche thermodurcie placée sur la couche intermédiaire, la couche intermédiaire consistant en un feutre en polypropylène d'une épaisseur de 0,001 à 1 mm.

2. Matériau composite stratifié selon la revendication 1, dans lequel une couche de décoration agencée sur la couche intermédiaire est encore placée entre la couche intermédiaire et la couche thermodurcie.

3. Matériau composite stratifié selon les revendications 1 ou 2, dont la couche intermédiaire est composée d'un feutre de polypropylène imprégné de résine.

4. Matériau composite stratifié selon l'une des revendications 1 à 3, dont la couche intermédiaire et le support sont composés de la même matière synthétique.

5. Matériau composite stratifié selon l'une des revendications 1 à 4, dont le support contient un matériau de renforcement supplémentaire à raison de 1,0 à 60 % en poids par rapport au poids total du support, ce matériau de renforcement étant composé de sulfate de baryum, d'hydroxyde de magnésium, de talc, de bois, de lin, de craie, de fibres de verre ou de billes de verre.

6. Matériau composite stratifié selon l'une des revendications 2 à 5, dont la couche de décoration est faite d'une matière synthétique ou de papier qui présentent d'une structuration, une coloration ou une combinaison des deux.

7. Matériau composite stratifié selon l'une des revendications 1 à 6, dont la couche thermodurcie est composée d'une matière synthétique duroplastique réticulée par l'effet de la chaleur ou de la pression au cours de la fabrication du matériau composite stratifié.

8. Matériau composite stratifié selon l'une des revendications 1 à 7, dont l'épaisseur totale est dans la plage de 1 mm à 100 mm, le support représentant au moins 80 % de l'épaisseur totale.

9. Procédé pour la fabrication d'un matériau composite stratifié selon l'une des revendications 1 à 8, **caractérisé en ce que** les matériaux de la couche intermédiaire et éventuellement de la couche de décoration et de la couche thermodurcie sont d'abord agencés sous la forme de fines formations planes et sont ensuite liés au matériau du support à des températures allant de 150 à 300°C.

10. Procédé pour la fabrication d'un matériau composite stratifié selon la revendication 9, **caractérisé en ce qu'**après le traitement thermique précédent, le matériau composite stratifié est façonné en trois dimensions à des températures allant de 150 à 300°.

11. Procédé selon les revendications 9 ou 10, **caractérisé en ce que** la liaison de la couche thermodurcie avec la couche intermédiaire ainsi qu'éventuellement avec la couche de décoration et le support a lieu par moulage par injection.

12. Procédé selon les revendications 9 ou 10, **caractérisé en ce que** la liaison de-la couche thermodurcie avec la couche intermédiaire ainsi qu'éventuellement avec la couche de décoration et le support a lieu par extrusion.

13. Procédé selon les revendications 9 ou 10, **caractérisé en ce que** la liaison de la couche thermodurcie avec la couche intermédiaire ainsi qu'éventuellement avec la couche de décoration et le support a lieu par compression thermique.

14. Utilisation du matériau composite stratifié selon les revendications 1 à 8 pour la fabrication de meubles, de recouvrements de sol, de panneaux muraux, d'appareils ménagers ou de corps façonnés dans le secteur électronique, le secteur de la construction ou le secteur automobile.
